# EUROPEAN PATENT APPLICATION

(11) **EP 4 597 680 A1**
(43) Date of publication of application: **06.08.2025**
(21) Application number: 23871533.8
(22) Date of filing: 15.08.2023
(51) Int. Cl.: H01M 10/0587, H01M 4/134, H01M 4/38, H01M 10/0525, H01M 50/531

(54) **NON-AQUEOUS ELECTROLYTE SECONDARY BATTERY**

(30) Priority: 30.09.2022 JP 2022158362
(71) Applicant: Panasonic Energy Co., Ltd., Osaka 570-8511 (JP)
(72) Inventor: ISHIGURO, Tasuku, Kadoma-shi, Osaka 571-0057 (JP); SASA, Tatsuro, Kadoma-shi, Osaka 571-0057 (JP); MATSUMOTO, Katsumasa, Kadoma-shi, Osaka 571-0057 (JP); ASADA, Yuki, Kadoma-shi, Osaka 571-0057 (JP)
(74) Representative: Novagraaf International SA
(86) International application number: PCT/JP2023/029544
(87) International publication number: WO 2024/070291

(57) **Abstract**

In the present invention, a non-aqueous electrolyte secondary battery has a wound electrode body comprising a negative electrode (12) in which a negative electrode composite layer (32) is formed on a negative electrode core (30). The negative electrode (12) has a non-facing part (12a) on the side of the electrode body on the inner end side in the winding direction, the non-facing part (12a) not facing the positive electrode across the separator. The non-facing part (12a) has a composite material non-facing part (12c), in which the negative electrode composition layer (32) is formed on at least one surface of the negative electrode core (30). In the composite material non-facing part (12c), the winding-direction length of a negative electrode composite layer (32a) formed on an inner circumference surface (30a) of the negative electrode core (30) is 0.3 turns or more along the winding direction of the composite material non-facing part (12c), and the winding-direction length of a negative electrode composite layer (32b) formed on an outer circumference surface (30b) of the negative electrode core (30) does not exceed 2/3 of the winding-direction length of the negative electrode composite layer (32a) formed on the inner circumference surface (30a) of the negative electrode core (30).

## Description

### TECHNICAL FIELD

The present disclosure relates to a non-aqueous electrolyte secondary battery.

### BACKGROUND

In recent years, as a secondary battery having high output and high energy density, a non-aqueous electrolyte secondary battery including an electrode assembly in which a positive electrode and a negative electrode are arranged to face each other with a separator interposed therebetween has been widely used.

For example, Patent Literature 1 discloses a non-aqueous electrolyte secondary battery including a wound electrode assembly in which a positive electrode and a negative electrode are wound with a separator interposed therebetween, in which the negative electrode includes a non-facing portion wound greater than or equal to 1.25 turns from an inner end in a winding direction of the wound electrode assembly in a state of not facing the positive electrode with the separator interposed therebetween, the non-facing portion includes a negative electrode mixture layer-formed portion in the negative electrode mixture layer is formed on at least one surface continuously from an outer end in the winding direction toward an inner side in the winding direction, and the negative electrode mixture layer-formed portion is wound greater than or equal to 0.75 turns.

As in Patent Literature 1, by providing the non-facing portion not facing the positive electrode on the inner end side in the winding direction of the electrode assembly in the negative electrode, the degree of circularity of a winding core of the electrode assembly can be improved. Thus, for example, the gas release property of the winding core can be maintained, so that the safety of a battery is achieved.

### CITATION LIST

### PATENT LITERATURE

Patent Literature 1: WO 2018/116876 A1

### SUMMARY

Incidentally, in a non-aqueous electrolyte secondary battery including a winding-type electrode assembly, when the electrode assembly expands with a charge-discharge cycle, stress is locally applied to a center of the electrode assembly, so that an electrode plate may be deformed at a position where the positive electrode and the negative electrode face each other, and a variation in the depth of charge may occur in the electrode plate surface.

Therefore, an object of the present disclosure is to provide a non-aqueous electrolyte secondary battery capable of suppressing electrode plate deformation at a position where a positive electrode and a negative electrode face each other while maintaining the degree of circularity of a winding core of an electrode assembly.

A non-aqueous electrolyte secondary battery according to the present disclosure includes: an electrode assembly in which a positive electrode and a negative electrode having a negative electrode mixture layer formed on a negative electrode core are wound with a separator interposed between the positive electrode and the negative electrode; and a non-aqueous electrolyte, in which the negative electrode has a non-facing portion not facing the positive electrode with the separator interposed between the positive electrode and the non-facing portion on an inner end side in a winding direction of the electrode assembly, the non-facing portion has a mixture non-facing portion in which the negative electrode mixture layer is formed on at least one surface of the negative electrode core from an outer end in the winding direction of the non-facing portion toward an inner side in the winding direction, in the mixture non-facing portion, a length in the winding direction of the negative electrode mixture layer formed on an inner peripheral surface of the negative electrode core directed radially inward of the electrode assembly is a length of greater than or equal to 0.3 turns along the winding direction of the mixture non-facing portion, and a length in the winding direction of the negative electrode mixture layer formed on an outer peripheral surface of the negative electrode core directed radially outward of the electrode assembly is less than or equal to 2/3 of the length in the winding direction of the negative electrode mixture layer formed on the inner peripheral surface of the negative electrode core.

According to the present disclosure, it is possible to provide a non-aqueous electrolyte secondary battery capable of suppressing electrode plate deformation at a position where a positive electrode and a negative electrode face each other while maintaining the degree of circularity of a winding core of an electrode assembly.

### BRIEF DESCRIPTION OF DRAWINGS

FIG. 1 is a schematic cross-sectional view of a non-aqueous electrolyte secondary battery as an example of an embodiment.
FIG. 2 is a view schematically illustrating a portion on an inner end side in a winding direction of an electrode assembly in the A-A cross section of FIG. 1.
FIG. 3 is a schematic cross-sectional view illustrating a configuration of a negative electrode on the inner end side in the winding direction of the electrode assembly.
FIG. 4 is a diagram for explaining a method for evaluating electrode plate deformation.

### DESCRIPTION OF EMBODIMENTS

Hereinafter, an example of an embodiment of a non-aqueous electrolyte secondary battery according to the present disclosure will be described in detail.

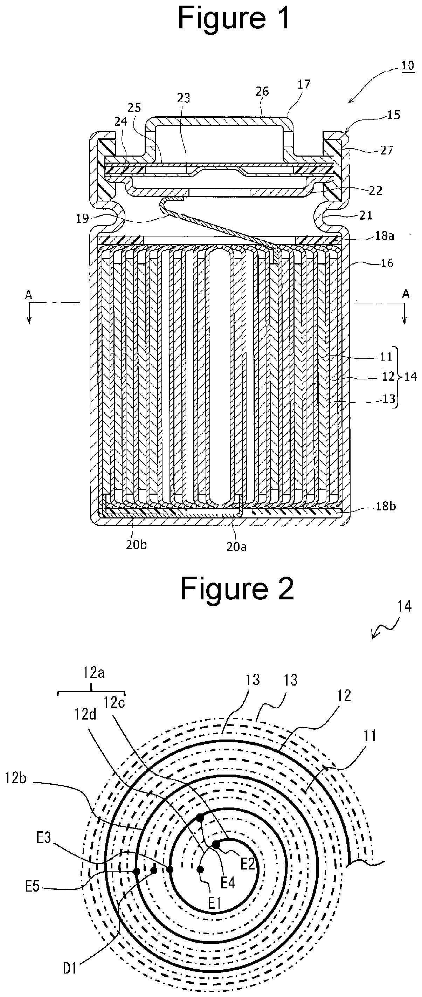

FIG. 1 is a schematic cross-sectional view of a non-aqueous electrolyte secondary battery according to an embodiment. A non-aqueous electrolyte secondary battery 10 illustrated in FIG. 1 includes a wound-type electrode assembly 14 formed by winding a positive electrode 11 and a negative electrode 12 with a separator 13 interposed therebetween, a non-aqueous electrolyte, insulating plates 18a and 18b disposed on and under the electrode assembly 14, respectively, and a battery case 15 as an exterior body. The battery case 15 includes a case body 16 that houses the electrode assembly 14, the non-aqueous electrolyte, and the like, and a sealing assembly 17 that closes an opening of the case body 16. The battery case 15 is not limited to a cylindrical or rectangular metal case, and may be, for example, a resin case (a so-called laminate-type case) formed by laminating a resin sheet.

The non-aqueous electrolyte includes, for example, a non-aqueous solvent and electrolyte salt dissolved in the non-aqueous solvent. Examples of the non-aqueous solvent include esters, ethers, nitriles, amides, and a mixed solvent of two or more types of these. The non-aqueous solvent may contain a halogen-substituted product obtained by substituting at least a hydrogen of these solvents with a halogen atom such as fluorine. As the electrolyte salt, for example, a lithium salt such as LiPF₆ is used.

The case body 16 is, for example, a cylindrical metal container with a bottom. A gasket 27 is provided between the case body 16 and the sealing assembly 17 to ensure airtightness within the battery. The case body 16 has a projecting portion 21 in which, for example, a part of a side surface portion of the case body 16 projects inward to support the sealing assembly 17. The projecting portion 21 is preferably formed in an annular shape in the circumferential direction of the case body 16, and supports the sealing assembly 17 on the upper surface of the projecting portion.

The sealing assembly 17 has a structure in which a filter 22, a lower vent member 23, an insulating member 24, an upper vent member 25, and a cap 26 are stacked sequentially from the electrode assembly 14 side. Each member constituting the sealing assembly 17 has, for example, a disk shape or a ring shape, and the members excluding the insulating member 24 are electrically connected to each other. The lower vent member 23 and the upper vent member 25 are connected to each other at their central portions, and the insulating member 24 is interposed between peripheral edges of the lower vent member 23 and the upper vent member 25. When the internal pressure of the non-aqueous electrolyte secondary battery 10 increases due to heat generation caused by an internal short circuit or the like, for example, the lower vent member 23 is deformed to push up the upper vent member 25 toward the cap 26 side and is broken, and a current path between the lower vent member 23 and the upper vent member 25 is cut off. When the internal pressure further increases, the upper vent member 25 breaks, and gas is discharged from an opening of the cap 26.

In the non-aqueous electrolyte secondary battery 10 illustrated in FIG. 1, a positive electrode lead 19 attached to the positive electrode 11 extends to the sealing assembly 17 side through a through hole of the insulating plate 18a, and is connected to the lower surface of the filter 22 which is the bottom plate of the sealing assembly 17 by welding or the like. As a result, the cap 26, which is the top plate of the sealing assembly 17 electrically connected to the filter 22, serves as a positive electrode terminal. A negative electrode lead 20a connected to the negative electrode 12 on a winding start side of the electrode assembly 14 and a negative electrode lead 20b connected to the negative electrode 12 on a winding end side of the electrode assembly 14 extend to a bottom side of the case body 16 through the insulating plate 18b and are connected to a bottom inner surface of the case body 16 by welding or the like. Accordingly, the case body 16 becomes a negative electrode terminal.

FIG. 2 is a view schematically illustrating a portion on an inner end side in a winding direction of an electrode assembly in the A-A cross section of FIG. 1. In FIG. 2, in order to make an arrangement relationship easy to understand, the negative electrode 12 is indicated by a solid line, the positive electrode 11 is indicated by a broken line, and the separator 13 is indicated by a one-dot chain line. Further, in FIG. 2, a gap between the positive electrode 11, the negative electrode 12, and the separator 13 is exaggerated. The electrode assembly 14 is formed by winding the positive electrode 11 and the negative electrode 12 with the separator 13 interposed therebetween. Specifically, the belt-shaped positive electrode 11, the belt-shaped negative electrode 12, and the pair of belt-shaped separators 13 are laminated in an order of one separator 13, the positive electrode 11, the other separator 13, and the negative electrode 12, and then this laminate is spirally wound to produce the electrode assembly 14. In the electrode assembly 14, a longitudinal direction of each electrode is a winding direction, and a width direction of each electrode is a winding axis direction.

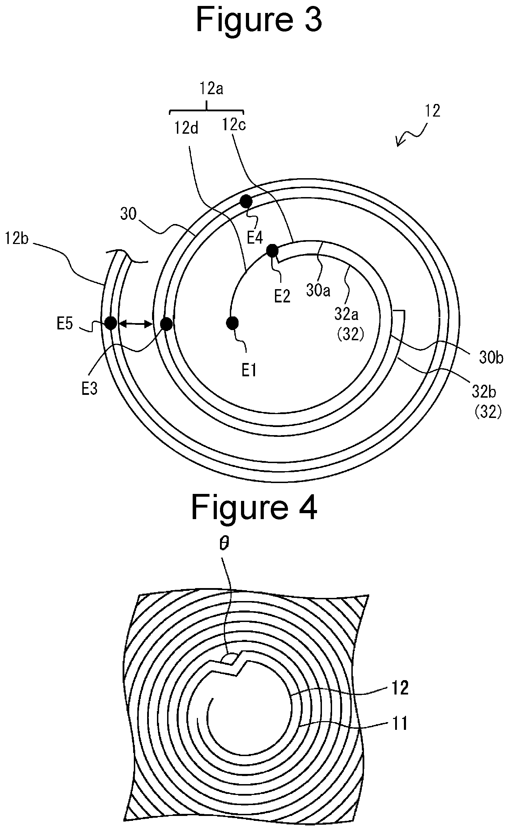

FIG. 3 is a schematic cross-sectional view illustrating a configuration of a negative electrode on the inner end side in the winding direction of the electrode assembly. In FIG. 3, the positive electrode 11 and the separator 13 are not illustrated. As illustrated in FIG. 3, the negative electrode 12 includes, for example, a negative electrode core 30 and a negative electrode mixture layer 32 formed on the negative electrode core 30. The negative electrode mixture layer 32 illustrated in FIG. 3 is formed on, for example, both surfaces of the negative electrode core 30, and has a negative electrode mixture layer 32a formed on an inner peripheral surface 30a of the negative electrode core 30 directed radially inward of the electrode assembly 14 and a negative electrode mixture layer 32b formed on an outer peripheral surface 30b of the negative electrode core 30 directed radially outward of the electrode assembly 14, out of both surfaces of the negative electrode core 30. Further, in illustrated in FIG. 2, the negative electrode 12 has a non-facing portion 12a not facing the positive electrode 11 with the separator 13 interposed therebetween on the inner end side in the winding direction which is a winding start side of the electrode assembly 14. Further, the negative electrode 12 has a facing portion 12b that is wound following the non-facing portion 12a and faces the positive electrode 11 with the separator 13 interposed therebetween.

The non-facing portion 12a has a mixture non-facing portion 12c and a core material non-facing portion 12d disposed inside the mixture non-facing portion 12c in the winding direction. Note that, in FIG. 2, a thick solid line indicates the mixture non-facing portion 12c (and the facing portion 12b), and a thin solid line indicates the core material non-facing portion 12d. The mixture non-facing portion 12c is a portion in which the negative electrode mixture layer is formed on at least one surface of the negative electrode core (at least one surface of the inner peripheral surface 30a and the outer peripheral surface 30b of the negative electrode core 30) from an outer end in the winding direction (point E3) of the non-facing portion 12a toward an inner side in the winding direction, and is a portion from the point E3 to the point E2 along the winding direction in the drawing. Note that the outer end in the winding direction (point E3) of the non-facing portion 12a is a facing portion on the inner side of the winding of the starting end (point D1) in the winding direction of the positive electrode 11. The core material non-facing portion 12d is a portion in which the negative electrode mixture layer is not formed on both surfaces of the negative electrode core from the inner end in the winding direction (point E1) of the non-facing portion 12a toward an outer side in the winding direction, and is a portion from the point E1 to the point E2 along the winding direction in the drawing.

The mixture non-facing portion 12c is preferably wound in a range of greater than or equal to 0.4 turns and less than or equal to 0.8 turns from the outer end in the winding direction of the non-facing portion 12a toward the inner side in the winding direction, for example, from the viewpoint of suppressing electrode plate deformation at a position where the positive electrode 11 and the negative electrode 12 face each other while maintaining the degree of circularity of the winding core of the electrode assembly 14. When the number of turns of the mixture non-facing portion 12c is less than 0.4 turns, the degree of circularity of the winding core may be lowered as compared with the case of greater than or equal to 0.4 turns, and when the number of turns is more than 0.8 turns, the effect of suppressing electrode plate deformation at a position where the positive electrode 11 and the negative electrode 12 face each other may be lowered as compared with the case of less than or equal to 0.8 turns.

In the present embodiment, in the mixture non-facing portion 12c, a length (A) in the winding direction of the negative electrode mixture layer 32a formed on the inner peripheral surface 30a of the negative electrode core 30 directed radially inward of the electrode assembly 14 is a length of greater than or equal to 0.3 turns along the winding direction of the mixture non-facing portion 12c, and a length (B) in the winding direction of the negative electrode mixture layer 32b formed on the outer peripheral surface 30b of the negative electrode core 30 directed radially outward of the electrode assembly 14 is less than or equal to 2/3 of the length (A) in the winding direction of the negative electrode mixture layer 32a formed on the inner peripheral surface 30a of the negative electrode core 30. When the length (A) in the winding direction of the negative electrode mixture layer 32a and the length (B) in the winding direction of the negative electrode mixture layer 32b satisfy the above ranges, the degree of circularity of the winding core located at the center of the electrode assembly 14 can be maintained as compared with a case where the above ranges are not satisfied. Even in a case where stress is applied to the center side of the electrode assembly 14 when the electrode assembly 14 is expanded with a charge-discharge cycle, friction between the non-facing portion 12a and the negative electrode on the wound outer side of the non-facing portion 12a is reduced, and electrode plate deformation at a position where the positive electrode 11 and the negative electrode 12 face each other can be suppressed. Although illustration is omitted, in the mixture non-facing portion 12c, the negative electrode mixture layer 32 may be formed only on the inner peripheral surface 30a of the negative electrode core 30 directed radially inward of the electrode assembly 14, and may not be formed on the outer peripheral surface 30b of the negative electrode core 30 directed radially outward of the electrode assembly 14. With this configuration as well, it is possible to maintain the degree of circularity of the winding core and to suppress electrode plate deformation at a position where the positive electrode 11 and the negative electrode 12 face each other. Note that the negative electrode mixture layer 32 is not limited to be formed on both surfaces of the negative electrode core 30 in the non-facing portion 12a and the facing portion 12b, and may be formed only on one surface of the negative electrode core 30 in the non-facing portion 12a and the facing portion 12b.

In the mixture non-facing portion 12c, the length (A) in the winding direction of the negative electrode mixture layer 32a formed on the inner peripheral surface 30a of the negative electrode core 30 is more preferably a length of greater than or equal to 0.7 turns and less than or equal to 1.0 turns along the winding direction of the mixture non-facing portion 12c. In the mixture non-facing portion 12c, the length (B) in the winding direction of the negative electrode mixture layer 32b formed on the outer peripheral surface 30b of the negative electrode core 30 is more preferably greater than or equal to 0.3 turns and less than or equal to 0.6 turns along the winding direction of the mixture non-facing portion 12c. When the length (A) in the winding direction of the negative electrode mixture layer 32a and the length (B)in the winding direction of the negative electrode mixture layer 32b satisfy the above ranges, electrode plate deformation at a position where the positive electrode 11 and the negative electrode 12 face each other may be further suppressed as compared with a case where the above ranges are not satisfied.

As in the present embodiment, the non-facing portion 12a preferably has the core material non-facing portion 12d. The core material non-facing portion 12d is preferably wound, for example, greater than or equal to 0.5 turns from the inner end in the winding direction (point E2) of the mixture non-facing portion 12c toward the inner side in the winding direction from the viewpoint of securing an installation space of the negative electrode lead. The negative electrode lead 20a illustrated in FIG. 1 is preferably connected to the negative electrode core 30 of the core material non-facing portion 12d provided in the non-facing portion 12a by welding or the like. That is, the negative electrode lead 20a is preferably connected to the negative electrode core 30 on the inner end side in the winding direction of the electrode assembly 14. For example, the negative electrode lead 20b provided on the outer end side in the winding direction of the electrode assembly 14 and the negative electrode lead 20a provided on the inner end side in the winding direction collect current at two places, so that the resistance component of the battery can be reduced. The negative electrode core 30 on the outer end side in the winding direction of the electrode assembly 14 may be brought into contact with the case body 16. This makes it possible to further reduce the resistance component of the battery.

As the negative electrode core 30 constituting the negative electrode 12, a foil of a metal that is stable in a potential range of the negative electrode, such as copper or a copper alloy, a film in which the metal is disposed on a surface layer thereof, or the like can be used. The thickness of the negative electrode core 30 is, for example, greater than or equal to 10 µm and less than or equal to 50 µm.

The negative electrode mixture layer 32 constituting the negative electrode 12 contains, for example, a negative electrode active material, a binder, and the like. The thickness of the negative electrode mixture layer 32 is, for example, in a range of greater than or equal to 10 µm and less than or equal to 100 µm. The negative electrode 12 can be produced, for example, by applying a negative electrode mixture slurry containing a negative electrode active material, the binder, and the like onto the negative electrode core, drying a coating film, and then rolling the coating film to form the negative electrode mixture layer 32 on the negative electrode core 30.

The negative electrode active material contained in the negative electrode mixture layer 32 is not particularly limited, for example, as long as it can reversibly store and release lithium ions, and examples thereof include a carbon material and a Si-based material. The negative electrode active material preferably contains a Si-based material from the viewpoint of increasing the capacity of the battery.

The carbon material may be, for example, a conventionally known carbon material used as the negative electrode active material, and examples thereof include natural graphite such as flake graphite, massive graphite, and earthy graphite, and artificial graphite such as massive artificial graphite (MAG) and graphitized mesophase carbon microbeads (MCMB).

The Si-based material includes, for example, a lithium ion conducting phase and Si particles dispersed in the lithium ion conducting phase. The lithium ion conducting phase includes, for example, at least one of a silicon oxide phase, a silicate phase, and a carbon phase.

The silicate phase preferably contains, for example, at least one element of alkali metal elements of lithium, sodium, potassium, rubidium, cesium, and francium, and Group 2 elements of the periodic table to which beryllium, magnesium, calcium, strontium, barium, and radium belong from the viewpoint of high lithium ion conductivity and the like. Among them, the silicate phase is preferably a silicate phase containing lithium (hereinafter, may be referred to as a lithium silicate phase) from the viewpoint of high lithium ion conductivity and the like.

The lithium silicate phase is represented by, for example, a formula: Li_{2z}SiO_{2+z} (0 < z < 2). From the viewpoints of stability, ease of production, lithium ion conductivity, and the like, z preferably satisfies a relationship of 0 < z < 1, and more preferably z = 1/2.

The Si-based material in which the Si particles are dispersed in the silicon oxide phase is represented by, for example, a general formula SiOₓ (a range of 0 < x < 2 is preferable, and a range of 0.5 ≤ x ≤ 1.6 is more preferable). The Si-based material in which the Si particles are dispersed in the carbon phase is represented by, for example, a general formula SiₓC_{y} (ranges of 0 < x ≤ 1 and 0 < y ≤ 1 are preferable).

A conductive layer coated with conductive carbon may be formed on a surface of the Si-based material. The conductive layer can be formed with, for example, a CVD method in which acetylene, methane, or the like is used, a method in which coal pitch, petroleum pitch, a phenol resin, or the like is mixed with a silicon-based active material and the mixture is heat-treated, or the like. As a heat treatment apparatus that performs the heat treatment, for example, a hot air furnace, a hot press, a lamp, a sheath heater, a ceramic heater, a rotary kiln, or the like can be used. In addition, the conductive layer may be formed by fixing a conductive filler such as carbon black to a particle surface of the Si-based material using the binder.

The content of the Si-based material is, for example, preferably greater than or equal to 5 mass% with respect to the total mass of the negative electrode mixture layer 32 from the viewpoint of increasing the capacity of the battery.

In addition to the carbon material and the Si-based material, examples of the negative electrode active material that can reversibly store and release lithium ions include Sn, an alloy containing Sn, a Sn-based material such as tin oxide, and a Ti-based material such as lithium titanate.

Examples of the binder include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or a salt thereof, polyacrylic acid (PAA) or a salt thereof, polyvinyl alcohol (PVA), and polyethylene oxide (PEO).

The positive electrode 11 includes a positive electrode core and a positive electrode mixture layer formed on a surface of the positive electrode core. The positive electrode mixture layer is preferably formed on both surfaces of the positive electrode core. As the positive electrode core, a foil of a metal that is stable in a potential range of the positive electrode 11, such as aluminum, a film in which the metal is disposed on a surface layer thereof, or the like can be used. The positive electrode mixture layer contains, for example, a positive electrode active material, a binder, a conductive agent, and the like. The positive electrode 11 can be produced, for example, by applying a positive electrode mixture slurry containing the positive electrode active material, the binder, the conductive agent, and the like onto the positive electrode core, drying a coating film, and then rolling the coating film to form the positive electrode mixture layer on both surfaces of the positive electrode core.

Examples of the positive electrode active material contained in the positive electrode mixture layer include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). One kind of them may be used alone, or a plurality of kinds of them may be used in combination. From the viewpoint of achieving the high capacity of the non-aqueous electrolyte secondary battery, the positive electrode active material preferably contains a lithium nickel composite oxide such as LiₓNiO₂, LiₓCo_{y}Ni_{1-y}O₂, or LiₓNi_{1-y}M_{y}O_{z} (M is at least one of Na, Mg, Sc, Y, Mn, Fe, Co, Ni, Cu, Zn, Al, Cr, Pb, Sb, and B, 0 <x ≤ 1.2, 0 < y ≤ 0.9, and 2.0 ≤ z ≤ 2.3). Inorganic particles such as tungsten oxide, aluminum oxide, or a lanthanoid-containing compound may be fixed to the particle surface of the lithium transition metal oxide.

Examples of the conductive agent contained in the positive electrode mixture layer include carbon materials such as carbon black (CB), acetylene black (AB), Ketjenblack, carbon nanotube (CNT), graphene, and graphite. The binder contained in the positive electrode mixture layer may be the same as that in the negative electrode 12.

As the separator 13, for example, a porous sheet having an ion permeation property and an insulation property is used. Specific examples of the porous sheet include a microporous thin film, a woven fabric, and a nonwoven fabric. As a material of the separator, an olefin-based resin such as polyethylene or polypropylene, cellulose, or the like is suitable. The separator 13 may be a laminate including a cellulose fiber layer and a thermoplastic resin fiber layer formed of an olefin-based resin or the like. Further, the separator 13 may be a multi-layer separator including a polyethylene layer and a polypropylene layer, and a separator obtained by applying a material such as an aramid-based resin or ceramic to the surface of the separator 13 may be used.

### EXAMPLES

Hereinafter, the present disclosure will be further described with reference to Examples. However, the present disclosure is not limited to these Examples.

### <Example 1>

### [Production of Positive Electrode]

100 parts by mass of LiNi_{0.88}Co_{0.09}Al_{0.03}O₂, 1 part by mass of acetylene black (AB), and 0.9 parts by mass of polyvinylidene fluoride (PVDF) were mixed, and an appropriate amount of N-methyl-2-pyrrolidone (NMP) was added to prepare a positive electrode mixture slurry. Next, the positive electrode mixture slurry was applied to both surfaces of an aluminum foil having a thickness of 15 µm, and a coating film was dried. Then, the coating film was rolled using a roller and then cut into a predetermined electrode size to produce a positive electrode having a positive electrode mixture layer formed on both surfaces of a positive electrode core. An exposed portion where the positive electrode mixture layer was not formed and the positive electrode core was exposed was provided at a central portion of the positive electrode in the longitudinal direction, and an aluminum positive electrode lead was welded to the exposed portion.

### [Preparation of Negative Electrode]

A negative electrode mixture slurry was prepared by mixing 92 parts by mass of graphite powder, 6 parts by mass of a Si-based material, 1 part by mass of sodium carboxymethylcellulose (CMC-Na), and 1 part by mass of a dispersion of styrene-butadiene rubber (SBR), and adding an appropriate amount of water thereto. Next, the negative electrode mixture slurry was applied to both surfaces of a copper foil having a thickness of 8 µm, and a coating film was dried. Then, the coating film was rolled using a roller and then cut into a predetermined electrode size to produce a negative electrode having a negative electrode mixture layer formed on both surfaces of a negative electrode core. A negative electrode core exposed portion where the negative electrode mixture layer was not formed and the negative electrode core was exposed was provided at both end portions in the longitudinal direction of the negative electrode, and a nickel negative electrode lead was welded to the negative electrode core exposed portion.

### [Production of Electrode Assembly]

A winding-type electrode assembly was produced by spirally winding the positive electrode and the negative electrode with the separator interposed therebetween. The number of windings of the electrode assembly was set to 18 times based on the positive electrode. The mixture non-facing portion of the negative electrode is wound 0.3 turns from the outer end in the winding direction of the non-facing portion toward the inner side in the winding direction. In the mixture non-facing portion, the length (B) in the winding direction of the negative electrode mixture layer formed on the outer surface of the negative electrode core directed radially outward of the electrode assembly and the length (A) in the winding direction of the negative electrode mixture layer formed on the inner surface of the negative electrode core directed radially inward of the electrode assembly were set to be lengths of 0.2 turns and 0.3 turns along the winding direction of the mixture non-facing portion.

### [Production of Non-Aqueous Electrolyte]

A non-aqueous electrolyte was prepared by adding 5 parts by mass of vinylene carbonate (VC) to 100 parts by mass of a mixed solvent obtained by mixing ethylene carbonate (EC) and dimethyl carbonate (DMC) at a volume ratio of 3:7, and dissolving lithium hexafluorophosphate (LiPF₆) therein at a concentration of 1.5 mol/liter.

### [Production of Non-Aqueous Electrolyte Secondary Battery]

Insulating plates were respectively arranged above and below the electrode assembly, and the electrode assembly was housed in a case body. The negative electrode lead was welded to a bottom of the case body, and the positive electrode lead was welded to a sealing assembly. A non-aqueous electrolyte secondary battery was produced by sealing the opening of the case body with the sealing assembly through the gasket after injecting a non-aqueous electrolyte into the case body, and then leaving the case body in a thermostatic chamber at 60°C for 15 hours.

### <Example 2>

A non-aqueous electrolyte secondary battery was produced in the same manner as in Example 1, except that, in the mixture non-facing portion, the length (B) in the winding direction of the negative electrode mixture layer formed on the outer surface of the negative electrode core and the length (A) in the winding direction of the negative electrode mixture layer formed on the inner surface of the negative electrode core were set to be lengths of 0.2 turns and 0.8 turns along the winding direction of the mixture non-facing portion, respectively.

### <Example 3>

A non-aqueous electrolyte secondary battery was produced in the same manner as in Example 1, except that, in the mixture non-facing portion, the length (B) in the winding direction of the negative electrode mixture layer formed on the outer surface of the negative electrode core and the length (A) in the winding direction of the negative electrode mixture layer formed on the inner surface of the negative electrode core were set to be lengths of 0.3 turns and 0.45 turns along the winding direction of the mixture non-facing portion, respectively.

### <Example 4>

A non-aqueous electrolyte secondary battery was produced in the same manner as in Example 1, except that, in the mixture non-facing portion, the length (B) in the winding direction of the negative electrode mixture layer formed on the outer surface of the negative electrode core and the length (A) in the winding direction of the negative electrode mixture layer formed on the inner surface of the negative electrode core were set to be lengths of 0.3 turns and 0.8 turns along the winding direction of the mixture non-facing portion, respectively.

### <Example 5>

A non-aqueous electrolyte secondary battery was produced in the same manner as in Example 1, except that, in the mixture non-facing portion, the length (B) in the winding direction of the negative electrode mixture layer formed on the outer surface of the negative electrode core and the length (A) in the winding direction of the negative electrode mixture layer formed on the inner surface of the negative electrode core were set to be lengths of 0.5 turns and 0.8 turns along the winding direction of the mixture non-facing portion, respectively.

### <Example 6>

A non-aqueous electrolyte secondary battery was produced in the same manner as in Example 1, except that, in the mixture non-facing portion, the length (B) in the winding direction of the negative electrode mixture layer formed on the outer surface of the negative electrode core and the length (A) in the winding direction of the negative electrode mixture layer formed on the inner surface of the negative electrode core were set to be lengths of 0.3 turns and 1.25 turns along the winding direction of the mixture non-facing portion, respectively.

### <Example 7>

A non-aqueous electrolyte secondary battery was produced in the same manner as in Example 1, except that, in the mixture non-facing portion, the length (B) in the winding direction of the negative electrode mixture layer formed on the outer surface of the negative electrode core and the length (A) in the winding direction of the negative electrode mixture layer formed on the inner surface of the negative electrode core were set to be lengths of 0.8 turns and 1.6 turns along the winding direction of the mixture non-facing portion, respectively.

### <Comparative Example 1>

A non-aqueous electrolyte secondary battery was produced in the same manner as in Example 1, except that the added amount of the Si-based material was changed from 6 parts by mass to 4 parts by mass and, in the mixture non-facing portion, the length (B) in the winding direction of the negative electrode mixture layer formed on the outer surface of the negative electrode core and the length (A) in the winding direction of the negative electrode mixture layer formed on the inner surface of the negative electrode core were set to be lengths of 0.2 turns and 0.2 turns along the winding direction of the mixture non-facing portion, respectively.

### <Comparative Example 2>

A non-aqueous electrolyte secondary battery was produced in the same manner as in Example 1, except that, in the mixture non-facing portion, the length (B) in the winding direction of the negative electrode mixture layer formed on the outer surface of the negative electrode core and the length (A) in the winding direction of the negative electrode mixture layer formed on the inner surface of the negative electrode core were set to be lengths of 0.5 turns and 0.5 turns along the winding direction of the mixture non-facing portion, respectively.

### <Comparative Example 3>

A non-aqueous electrolyte secondary battery was produced in the same manner as in Example 1, except that, in the mixture non-facing portion, the length (B) in the winding direction of the negative electrode mixture layer formed on the outer surface of the negative electrode core and the length (A) in the winding direction of the negative electrode mixture layer formed on the inner surface of the negative electrode core were set to be lengths of 1.25 turns and 1.25 turns along the winding direction of the mixture non-facing portion, respectively.

### [Degree of Circularity of Winding Core of Electrode Assembly]

The cross section of the non-aqueous electrolyte secondary battery of each of Examples and Comparative Examples was observed in the vicinity of the center of the winding of the electrode assembly using an X-ray CT apparatus (SMX-225CT FPD HR, manufactured by Shimadzu Corporation). The length (circumferential length) of one turn of the positive electrode innermost circumference and the area surrounded by the positive electrode innermost circumference were measured, and the degree of circularity of the winding core of the electrode assembly (4π × area/(circumferential length^2)) was calculated.

### [Evaluation of Electrode Plate Deformation]

The non-aqueous electrolyte secondary batteries of Examples and Comparative Examples were charged at a constant current of 0.3 It until a battery voltage reached 4.2 V, and then charged at a constant voltage of 4.2 V until a current reached 0.02 It. Thereafter, the non-aqueous electrolyte secondary battery was discharged at a constant current of 1.0 It until the battery voltage reached 2.7 V. The charging and discharging was set as one cycle, and 500 cycles were performed while a pause time of 20 minutes was inserted between cycles. After the 500 cycles, the non-aqueous electrolyte secondary battery was charged at a constant current of 0.3 It until the battery voltage reached 4.2 V, and then charged at a constant voltage of 4.2 V until the current reached 0.02 It to enter a charged state. The cross section of the non-aqueous electrolyte secondary battery in this charged state was observed in the vicinity of the center of the winding of the electrode assembly using an X-ray CT apparatus (SMX-225CT FPD HR, manufactured by Shimadzu Corporation). As illustrated in FIG. 4, when deformation (bending) of the electrode plate (at least one of the positive electrode 11 and the negative electrode 12) having an angle θ equal to or lower than 150° was confirmed at a position where the positive electrode and the negative electrode faced each other, it was determined to be electrode plate deformation to evaluate whether an electrode plate was deformed. The number of batteries evaluated is 20.

Evaluation results of the degree of circularity of the winding core of the electrode assembly and the electrode plate deformation in Examples and Comparative Examples are summarized in Table 1. With respect to the evaluation results of the degree of circularity of the winding core of the electrode assembly, other Examples and Comparative Examples are shown relatively with the degree of circularity of the winding core of the electrode assembly of Comparative Example 3 as a reference (100%).

**[Table 1]**

| | B 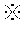 | A 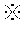 | B/A 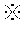 | Content of Si-based material | Degree of circularity of winding core | Occurrence rate of electrode plate deformation |
|---|---|---|---|---|---|---|
| Example 1 | 0.20 turns | 0.30 turns | 0.67 | 6 wt% | 89% | 3/20 |
| Example 2 | 0.20 turns | 0.80 turns | 0.25 | 6 wt% | 91% | 4/20 |
| Example 3 | 0.30 turns | 0.45 turns | 0.67 | 6 wt% | 99% | 0/20 |
| Example 4 | 0.30 turns | 0.80 turns | 0.38 | 6 wt% | 100% | 1/20 |
| Example 5 | 0.50 turns | 0.80 turns | 0.63 | 6 wt% | 100% | 0/20 |
| Example 6 | 0.30 turns | 1.25 turns | 0.24 | 6 wt% | 99% | 3/20 |
| Example 7 | 0.80 turns | 1.60 turns | 0.50 | 6 wt% | 100% | 4/20 |
| Comparative Example 1 | 0.20 turns | 0.20 turns | 1.0 | 4 wt% | 86% | 6/20 |
| Comparative Example 2 | 0.50 turns | 0.50 turns | 1.0 | 6 wt% | 91% | 9/20 |
| Comparative Example 3 | 1.25 turns | 1.25 turns | 1.0 | 6 wt% | 100% | 8/20 |

| | | | | | | |
|---|---|---|---|---|---|---|
| A: Length in the winding direction of the negative electrode mixture layer formed on the inner peripheral surface of the negative electrode core in the mixture non-facing portion B: Length in the winding direction of the negative electrode mixture layer formed on the outer peripheral surface of the negative electrode core in the mixture non-facing portion | | | | | | |

In Comparative Examples 1 to 3, the degree of circularity of the winding core of the electrode assembly was as high as greater than or equal to 85%, but the occurrence rate of electrode plate deformation was as high as greater than or equal to 6/20. On the other hand, in any of Examples 1 to 7, the degree of circularity of the winding core is greater than or equal to 89%, and it can be said that a high degree of circularity is maintained. In any of Examples 1 to 7, the electrode plate deformation was less than or equal to 4/20, which was a low occurrence rate. From these results, in the mixture non-facing portion of the negative electrode, the length in the winding direction of the negative electrode mixture layer formed on the inner peripheral surface of the negative electrode core is a length of greater than or equal to 0.3 turns along the winding direction of the mixture non-facing portion, and the length in the winding direction of the negative electrode mixture layer formed on the outer peripheral surface of the negative electrode core is less than or equal to 2/3 of the length in the winding direction of the negative electrode mixture layer formed on the inner peripheral surface of the negative electrode core, whereby the electrode plate deformation at a position where the positive electrode and the negative electrode face each other can be suppressed while the degree of circularity of the winding core of the electrode assembly is maintained.

### [Supplementary Notes]

(1) A non-aqueous electrolyte secondary battery including: an electrode assembly in which a positive electrode and a negative electrode having a negative electrode mixture layer formed on a negative electrode core are wound with a separator interposed between the positive electrode and the negative electrode; and a non-aqueous electrolyte,
   wherein the negative electrode has a non-facing portion not facing the positive electrode with the separator interposed between the positive electrode and the non-facing portion on an inner end side in a winding direction of the electrode assembly,
   the non-facing portion has a mixture non-facing portion in which the negative electrode mixture layer is formed on at least one surface of the negative electrode core from an outer end in the winding direction of the non-facing portion toward an inner side in the winding direction,
   in the mixture non-facing portion, a length in the winding direction of the negative electrode mixture layer formed on an inner peripheral surface of the negative electrode core directed radially inward of the electrode assembly is a length of greater than or equal to 0.3 turns along the winding direction of the mixture non-facing portion, and
   a length in the winding direction of the negative electrode mixture layer formed on an outer peripheral surface of the negative electrode core directed radially outward of the electrode assembly is less than or equal to 2/3 of the length in the winding direction of the negative electrode mixture layer formed on the inner peripheral surface of the negative electrode core.
(2) The non-aqueous electrolyte secondary battery according to (1), wherein in the mixture non-facing portion, the length in the winding direction of the negative electrode mixture layer formed on the inner peripheral surface of the negative electrode core is a length of greater than or equal to 0.7 turns and less than or equal to 1.0 turns along the winding direction of the mixture non-facing portion, and the length in the winding direction of the negative electrode mixture layer formed on the outer peripheral surface of the negative electrode core is a length of greater than or equal to 0.3 turns and less than or equal to 0.6 turns along the winding direction of the mixture non-facing portion.
(3) The non-aqueous electrolyte secondary battery according to (1) or (2), wherein
   the non-facing portion has a core material non-facing portion in which the negative electrode mixture layer is not formed on both surfaces of the negative electrode core, and
   the core material non-facing portion is wound greater than or equal to 0.5 turns from the inner end in the winding direction of the mixture non-facing portion toward the inner side in the winding direction.
(4) The non-aqueous electrolyte secondary battery according to (3), including a negative electrode lead connected to the negative electrode core of the core material non-facing portion.
(5) The non-aqueous electrolyte secondary battery according to any one of (1) to (4), wherein
   the negative electrode mixture layer contains a Si-based material, and
   a content of the Si-based material is greater than or equal to 5 mass% with respect to a total mass of the negative electrode mixture layer.

### REFERENCE SIGNS LIST

10 Non-aqueous electrolyte secondary battery
11 Positive electrode
12 Negative electrode
12a Non-facing portion
12b Facing portion
12c Mixture non-facing portion
12d Core material non-facing portion
13 Separator
14 Electrode assembly
15 Battery case
16 Case body
17 Sealing assembly
18a, 18b Insulating plate
19 Positive electrode lead
20a, 20b Negative electrode lead
21 Projecting portion
22 Filter
23 Lower vent member
24 Insulating member
25 Upper vent member
26 Cap
27 Gasket
30 Negative electrode core
30a Inner peripheral surface
30b Outer peripheral surface
32, 32a, 32bNegative electrode mixture layer

## Claims

1. A non-aqueous electrolyte secondary battery comprising: an electrode assembly in which a positive electrode and a negative electrode having a negative electrode mixture layer formed on a negative electrode core are wound with a separator interposed between the positive electrode and the negative electrode; and a non-aqueous electrolyte,
wherein the negative electrode has a non-facing portion not facing the positive electrode with the separator interposed between the positive electrode and the non-facing portion on an inner end side in a winding direction of the electrode assembly,
the non-facing portion has a mixture non-facing portion in which the negative electrode mixture layer is formed on at least one surface of the negative electrode core from an outer end in the winding direction of the non-facing portion toward an inner side in the winding direction,
in the mixture non-facing portion, a length in the winding direction of the negative electrode mixture layer formed on an inner peripheral surface of the negative electrode core directed radially inward of the electrode assembly is a length of greater than or equal to 0.3 turns along the winding direction of the mixture non-facing portion, and
a length in the winding direction of the negative electrode mixture layer formed on an outer peripheral surface of the negative electrode core directed radially outward of the electrode assembly is less than or equal to 2/3 of the length in the winding direction of the negative electrode mixture layer formed on the inner peripheral surface of the negative electrode core.

2. The non-aqueous electrolyte secondary battery according to claim 1, wherein in the mixture non-facing portion, the length in the winding direction of the negative electrode mixture layer formed on the inner peripheral surface of the negative electrode core is a length of greater than or equal to 0.7 turns and less than or equal to 1.0 turns along the winding direction of the mixture non-facing portion, and the length in the winding direction of the negative electrode mixture layer formed on the outer peripheral surface of the negative electrode core is a length of greater than or equal to 0.3 turns and less than or equal to 0.6 turns along the winding direction of the mixture non-facing portion.

3. The non-aqueous electrolyte secondary battery according to claim 1 or 2, wherein
the non-facing portion has a core material non-facing portion in which the negative electrode mixture layer is not formed on both surfaces of the negative electrode core, and
the core material non-facing portion is wound greater than or equal to 0.5 turns from the inner end in the winding direction of the mixture non-facing portion toward the inner side in the winding direction.

4. The non-aqueous electrolyte secondary battery according to claim 3, comprising a negative electrode lead connected to the negative electrode core of the core material non-facing portion.

5. The non-aqueous electrolyte secondary battery according to claim 1 or 2, wherein
the negative electrode mixture layer contains a Si-based material, and
a content of the Si-based material is greater than or equal to 5 mass% with respect to a total mass of the negative electrode mixture layer.
